(19) Europäisches Patentamt
European Patent Office
Office européen des brevets

(11) Veröffentlichungsnummer: **0 165 509**
**A1**

(12) **EUROPÄISCHE PATENTANMELDUNG**

(21) Anmeldenummer: 85106542.5

(22) Anmeldetag: 29.05.85

(51) Int. Cl.[4]: C 07 F 7/10
C 07 F 7/18

(30) Priorität: 09.06.84 DE 3421648
20.02.85 DE 3505746

(43) Veröffentlichungstag der Anmeldung:
27.12.85 Patentblatt 85/52

(84) Benannte Vertragsstaaten:
BE CH DE FR GB IT LI NL

(71) Anmelder: BAYER AG
Konzernverwaltung RP Patentabteilung
D-5090 Leverkusen 1 Bayerwerk(DE)

(72) Erfinder: Findeisen, Kurt, Dr.
In der Follmühle 10
D-5068 Odenthal(DE)

(72) Erfinder: Fauss, Rudolf, Dr.
Gerstenkamp 10
D-5000 Koeln 80(DE)

(54) **Verfahren zur Verbesserung der Löslichkeit von bestimmten, in inerten Lösungsmitteln schwer löslichen organischen Verbindungen durch Silylierung mit Trialkylsilylcyanid.**

(57) Die Löslichkeit von schwer löslichen organischen Verbindungen, welche über ein Heteroatom gebundene "Zerewitinowaktive" Wasserstoffatome besitzen und damit silylierbar sind, in solchen organischen Lösungsmitteln, die keine über Heteroatome gebundenen Waserstoffatome tragen, kann dadurch erheblich verbessert werden, daß man diese Verbindungen durch Silylierung mittels Trialkylsilylcyanid-insbesondere mittels Trimethylsilylcyanid, $(CH_3)_3Si-CN$- in entsprechende Silylderivate überführt. Die resultierenden Mono- oder Polytrialkylsilyl-Derivate sind in den gebräuchlichen inerten Lösungsmitteln gut löslich.

Das neue Verfahren kann angewandt werden z. B. bei allen Alkoholen, Phenolen, Thiolen, Carbonsäuren, Aminen, Amiden, insbesondere bei Aminosäuren und Kohlehydraten, ferner auch bei heterocyclischen Aminen wie den Aminopyrimidinen, Aminotriazinen und Aminotriazinonen.

EP 0 165 509 A1

BAYER AKTIENGESELLSCHAFT 5090 Leverkusen, Bayerwerk
Konzernverwaltung RP
Patentabteilung Bi/m-c

# Verfahren zur Verbesserung der Löslichkeit von bestimmten, in inerten Lösungsmitteln schwer löslichen organischen Verbindungen durch Silylierung mit Trialkylsilylcyanid

Die vorliegende Erfindung betrifft ein Verfahren zur Verbesserung der Löslichkeit von bestimmten schwer löslichen, aber silylierbaren organischen Verbindungen in solchen organischen Lösungsmitteln, die keine über Heteroatome gebundenen Wasserstoffatome tragen, durch Überführung in Silylderivate mittels Trialkylsilylcyanid. Das erfindungsgemäße Verfahren kann angewandt werden bei allen organischen Verbindungen dieser Art, welche über ein Heteroatom gebundene "Zerewitinow-aktive" Wasserstoffatome besitzen und damit silylierbar sind.

Verfahren zur Silylierung solcher organischer Verbindungen, insbesondere von Aminosäuren, sind bereits bekannt geworden; als Silylierungsmittel sind dabei Trialkylsilylhalogenide eingesetzt worden (Liebigs Ann. Chem. 763, S. 17-38 (1972)). Diese haben den Nachteil, daß die entstehenden Halogenwasserstoffe

durch Basen gebunden werden müssen. Die Abtrennung der entstehenden Salze führt zu Ausbeuteverlusten und bedeutet eine zusätzliche und somit kostenintensive Verfahrensmaßnahme.

Außerdem sind silylierte Amide wie beispielsweise Trimethylsilylacetamid zur Silylierung von Aminosäuren herangezogen worden. Auch hier muß das daraus entstehende entsilylierte Amid aufwendig entfernt werden. Außerdem sind einige Aminosäuren, wie z.B. Glycin und Alanin schwierig zu silylieren, da sie zu 2,5-Dioxopiperazinen cyclisieren (vgl. Houben-Weyl, Methoden der organischen Chemie, Bd. XV/1, S. 399/400).

Auch die Silylierung mit Hexamethyldisilazan ist in vielen Fällen ungeeignet, da der entstehende Ammoniak chemisch oft mitreagiert (vgl. Liebigs Ann. Chem. 763, S. 18 (1972)).

Einige technisch wichtige Verbindungen, wie Aminotriazinon-Derivate, von denen die beiden folgenden Vertreter genannt seien:

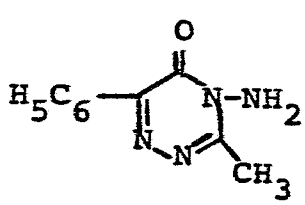

und

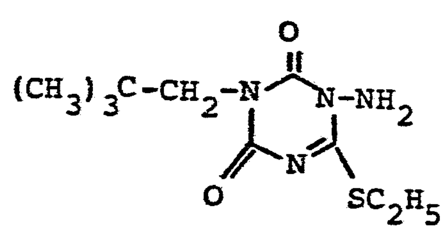

(Metamitron)

(Ametridione)

lassen sich nach eigenen Versuchen mit Hexamethyldisilazan oder Trimethylsilylchlorid überhaupt nicht silylieren.

Ferner ist die Silylierung von einigen sekundären Aminen mittels Trimethylsilylcyanid bekannt geworden. Aber auch dabei muß der entstehende Cyanwasserstoff durch Basen, z.B. durch überschüssige Amin-Ausgangsverbindung, abgefangen werden. Wird bei höheren Temperaturen gearbeitet, besteht die Gefahr von Weiterreaktionen. Außerdem ist die Reaktion von Trimethylsilylcyanid mit Schwefelwasserstoff bekannt (J. Gen. Chem. UdSSR, 1978 (3), S. 1946-47).

Es ist auch bekannt geworden, daß enolische OH-Gruppen mit Trimethylsilylcyanid unter Bildung der O-Silyl-Derivate reagieren (vgl. J. Prakt. Chem. 315 (1973), S. 367-74).

Ferner gestaltet sich die Aufarbeitung bei der Silylierung von Mercaptanen, welche bisher am besten mit Hexamethyldisilazan unter Azolkatalyse vorgenommen wird (J. Organometallic Chemistry 61, 83 (1973)), meist schwierig. Besonders die Abtrennung der letzten Mengen an Amin-Mercaptansalzen gelingt destillativ nur schlecht (J.Am.Chem.Soc. 99, 5009 ff (1977); vgl. insbesondere "Procedure A" Seite 5014 und "Anmerkung 25" Seite 5017).

Es wurde nun gefunden, daß man die Löslichkeit von in inerten organischen Lösungsmitteln schwer löslichen organischen Verbindungen mit Zerewitinow-aktiven, über Heteroatome gebundenen Wasserstoffatomen dadurch

verbessern kann, daß man diese Verbindungen durch Silylierung mittels Trialkylsilylcyanid in entsprechende Silyl-Derivate überführt. Die resultierenden Mono- oder Polytrialkylsilyl-Derivate sind in den gebräuchlichen inerten Lösungsmitteln gut löslich.

Unter dem Begriff "inertes organisches Lösungsmittel" werden im Rahmen dieser Erfindung solche Lösungsmittel verstanden, die keine über Heteroatome gebundenen Wasserstoffatome tragen.

Unter dem Begriff "Zerewitinow-aktives Wasserstoffatom" versteht man allgemein ein Wasserstoffatom, das in einer organischen Verbindung an ein Zentrum gebunden ist, welches, verglichen mit einem C-Atom eines Kohlenwasserstoffes, eine stark elektronenabziehende Wirkung ausübt. Im engeren Sinne bedeutet "Zerewitinow-aktiv" ein im Sinne der Reaktion

$$CH_3MgJ + HX \longrightarrow CH_4 + JMgX$$

aktives H-Atom (vgl. z.B. C.R. Noller, Lehrbuch der organischen Chemie, Springer-Verlag, Berlin, Göttingen, Heidelberg, 1960, S. 127).

Es ist als überraschend zu bezeichnen, daß die Silylierung mit Trialkylsilylcyanid universell und ohne Zusatz von Hilfsbasen verläuft. Es war außerdem überraschend, daß der entstehende sehr reaktive Cyanwasserstoff sich einfach und ohne Nebenreaktionen einzugehen aus dem Reaktionsgemisch destillativ entfernen läßt.

Es war ferner überraschend, daß die Löslichkeit von in inerten organischen Lösungsmitteln schwer löslichen Verbindungen durch die erfindungsgemäße Überführung in Silyl-Derivate drastisch verbessert wird. Dies ist z.B. von besonderem Interesse bei Aminosäuren oder Zuckern, bei denen nach Überführung in entsprechende Silyl-Derivate Umsetzungen möglich werden, die nur in nichtwäßrigen unpolaren Lösungsmittelsystemen ablaufen.

Ein weiterer Vorteil des erfindungsgemäßen Verfahrens besteht darin, daß mit seiner Hilfe organische silylierte Verbindungen entstehen, die sich vielfach unzersetzt destillieren lassen, auch wenn die ihnen zugrunde liegenden organischen Verbindungen nicht destillierbar waren. Nach der Destillation lassen sich die Silylgruppen leicht in an sich bekannter Weise, z.B. durch Hydrolyse, wieder abspalten. Das erfindungsgemäße Verfahren kann somit auch eingesetzt werden, um organische Verbindungen, die sich unsilyliert nicht destillieren lassen, durch Destillation zu reinigen.

Ein weiterer Vorteil des erfindungsgemäßen Verfahrens liegt darin, daß die Löslichkeit von Wirkstoffen, z.B. auf dem Gebiet der Schädlingsbekämpfung und des Pflanzenschutzes, in "inerten organischen Lösungsmitteln" verbessert wird. Dies ist für zahlreiche Aufgaben der Zubereitung und Formulierung von Wirkstoffen von großer wirtschaftlicher Bedeutung.

Überraschend vorteilhaft und glatt verläuft auch die Silylierung von Mercaptanen mit Trimethylsilylcyanid; insbesondere treten dabei im Gegensatz zu den vorbekannten Verfahren keine Aufarbeitungsprobleme auf. S-Silylmercaptane können bekanntlich mit Vorteil zur Thioketalisierung von Carbonylfunktionen verwendet werden (vgl. J.Am.Chem.Soc. 99, 5009 ff(1977)).

Weiterhin können manche nicht lagerstabile Verbindungen durch Silylierung mit Trimethylsilylcyanid in lagerstabile Silylderivate überführt werden; als Beispiel sei Phenylhydroxylamin genannt.

Als "inerte organische Lösungsmittel" seien bevorzugt genannt: aliphatische, cycloaliphatische, aromatische Kohlenwasserstoffe, die gegebenenfalls durch Halogen wie Fluor, Chlor, Brom oder durch Nitro substituiert sind, Ester, Ether, tertiäre Amide (-CONR'R") und Sulfone, ferner Ketone, welche nicht enolisieren.

Besonders bevorzugt sind gesättigte und ungesättigte aliphatische oder cycloaliphatische Kohlenwasserstoffe, die gegebenenfalls durch Fluor oder Chlor substituiert sind, ferner aromatische Kohlenwasserstoffe, die gegebenenfalls durch Halogen substituiert sind.

Insbesondere seien genannt aus der Reihe der aliphatischen und cycloaliphatischen Kohlenwasserstoffe: Pentan, Hexan, Heptan, Octan, Isooctan, Dodecan, ein- oder mehrfach, gleich oder verschieden durch Fluor oder Chlor substituierte gesättigte und ungesättigte Kohlenwasserstoffe, wie Methylenchlorid, Chloroform, Tetrachlorkohlenstoff, Dichlorethylen, Tetrachlorethylen, sowie Gemische aliphatischer Kohlenwasserstoffe ausgewählter Siedebereiche wie Waschbenzin, Petrolether, Leichtbenzin, ferner Cyclohexan und Cyclohexen.

Aus der Reihe der aromatischen Kohlenwasserstoffe seien genannt: Benzol, Toluol, Nitrobenzol, Chlorbenzol, die Xylole, die Dichlorbenzole, Styrol sowie technische Lösungsmittel, wie z.B. Solvent Naphtha$^{(R)}$ oder Solvesso$^{(R)}$.

Aus der Reihe der Ether seien genannt: Diethylether, Diisopropylether, Di-n-butylether, Methylphenylether, Diphenylether.

Aus der Reihe der Ester seien genannt: Essigsäureethylester, Benzoesäuremethylester, Benzoesäureethylester.

Aus der Reihe der tertiären Amide seien genannt: Dimethylformamid und Dimethylacetamid.

Bevorzugte Trialkylsilylcyanide sind Tri($C_{1-4}$-alkyl)-silylcyanide, besonders bevorzugt ist Trimethylsilylcyanid. Die erfindungsgemäß verwendbaren Trialkylsilylcyanide sind bekannt oder können in analoger Weise wie die bekannten Verbindungen dieser Gruppe hergestellt werden (vgl. z. B. J. Organometal. Chem. Library Vol. 12, S. 53 ff. (1981) und dort zitierte Literatur, sowie DE-OS 30 18 821, EP-A-00 40 356 und US-PS 4.328.351).

Als silylierbare organische Verbindungen, deren Löslichkeit in "inerten organischen Lösungsmitteln" erfindungsgemäß verbessert werden kann, seien bevorzugt genannt: organische Verbindungen, die wenigstens ein über O, S oder N gebundenes Zerewitinow-aktives Wasserstoffatom tragen. Beispielhaft seien Verbindungen genannt, bei denen das Zerewitinow-aktive Wasserstoffatom

an einen Rest der Formel -COO-, >C=N-O-, >N-O-, >N-N-, >C=N-N-, -CO-N-, -O-CO-N-, -CO-S-, -CS-S-, >N-CO-N-, -N-CO-N-O-, $-SO_2-O-$, -S- gebunden ist.

Als besonders bevorzugt seien Verbindungen mit einer oder mehreren OH-, SH-, NH- und/oder $NH_2$-Gruppen sowie speziell Aminosäuren und Kohlenhydrate genannt.

Als Alkohole seien bevorzugt mehrwertige, gegebenenfalls substituierte Alkohole und Phenole, wie Glykole, Glyzerin, Butandiol, Cyclohexandiol, Brenzcatechin, Resorcin und Hydrochinon genannt.

Als Kohlenhydrate seien bevorzugt genannt: Zucker wie Mono-, Di- und Polysaccharide, Zuckeralkohole, Zuckersäuren und Aminozucker. Insbesondere seien genannt aus der Gruppe der Zuckeralkohole z.B. Sorbit, Mannit, Arabit, Erythrit, Pentaerythrit; aus der Gruppe der Monosaccharide z.B. Threose, Xylose, Glucose, Fructose; aus der Gruppe der Disaccharide z.B. Saccharose und Maltose; aus der Gruppe der Polysaccharide z.B. Stärke, Glycogen und Cellulose; aus der Gruppe der Zuckersäuren z.B. die Gluconsäuren; aus der Gruppe der Aminozucker z.B. 2-Amino-2-desoxyglucopyranose.

Als Aminosäuren seien bevorzugt Verbindungen des folgenden Typs der Formel (I) genannt:

$$(NH_2)_b - R - (COOH)_a \qquad \text{(I)}$$

worin

a für eine ganze Zahl von 1 bis 4, insbesondere für 1 oder 2 steht,

b für eine ganze Zahl von 1 bis 4, insbesondere für 1 oder 2 steht und

R für zwei- oder mehrwertige Alkyl- oder Arylreste steht, die gegebenenfalls weiter substituiert sein können, sowie für ein- oder mehrkernige, zwei- oder mehrwertige, gesättigte oder ungesättigte oder aromatische Heterocyclenreste, die ein oder mehrere Heteroatome enthalten und gegebenenfalls substituiert sind, wobei als zusätzliche Substituenten zu nennen sind: Hydroxyl, Mercapto, Alkylamino, Dialkylamino, Halogen, Nitro, Alkyl, Aryl, Heteroaryl, Alkoxy, Alkylthio, Aryloxy, Arylthio.

Ganz besonders bevorzugt sind die α-Aminosäuren des Typs der Formel (I).

Als Beispiele für Aminosäuren der Formel (I) seien genannt: Glycin, Alanin, Valin, Leucin, Isoleucin, Phenylalanin, Prolin, Serin, Threonin, Cystein, Methionin, Tryptophan, Tyronin, Asparagin, Glutamin, Asparaginsäure, Glutaminsäure, Lysin, Arginin, Histidin, Cystin, Homocystein, Aminoadipinsäure, Ornithin, Aminobuttersäure, Cycloserin, Phenylserin, o-Aminobenzoesäure und p-Aminobenzoesäure. Ferner seien 6-Aminopenicillansäure und 7-Aminocephalosporansäure und deren Derivate besonders genannt.

Darüber hinaus lassen sich mit besonderem Vorteil auch heterocyclische Amine, welche meist schwer löslich sind,

mit Trimethylsilylcyanid in einfacher Weise silylieren. Als Beispiele hierfür seien genannt: Amino-pyrimidine und Amino-triazine, wie z. B. Melamin, Metamitron, Metribuzin und Ametridione, sowie die in der Patentanmeldung EP-A 2-0 101 670 unter Formel (IV)/Seite 5 zusammengefaßten Amine.

Zusätzlich sind bevorzugt Sulfonsäuren, wie z.B. p-Toluolsulfonsäure und Methansulfonsäure.

Bei der Durchführung des erfindungsgemäßen Verfahrens setzt man pro Äquivalent zu silylierendes Zerewitinow-aktives Wasserstoffatom in den silylierbaren organischen Verbindungen mindestens 1 Mol Trialkylsilylcyanid ein; bevorzugt ist ein Verhältnis (Äquivalent Zerewitinow-aktives H-Atom zu Trialkylsilylcyanid) von 1 : 1 - 1,5.

Wird beispielsweise eine Aminosäure mit Trimethylsilylcyanid umgesetzt, so läßt sich die Reaktion durch folgendes Formelschema wiedergeben:

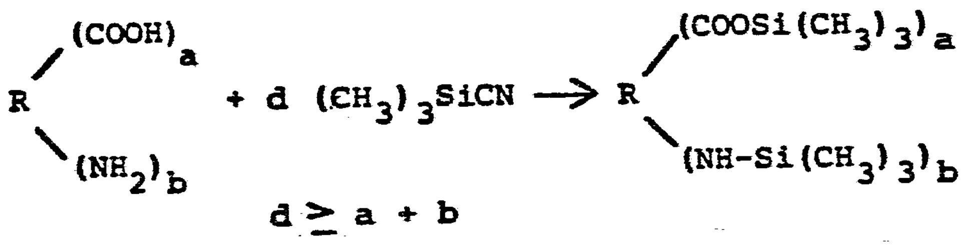


$d \geq a + b$

Wird beispielsweise ein Säureadditionssalz einer Aminosäure mit Trimethylsilylcyanid umgesetzt, so läßt sich die Reaktion durch folgendes Formelschema wiedergeben:

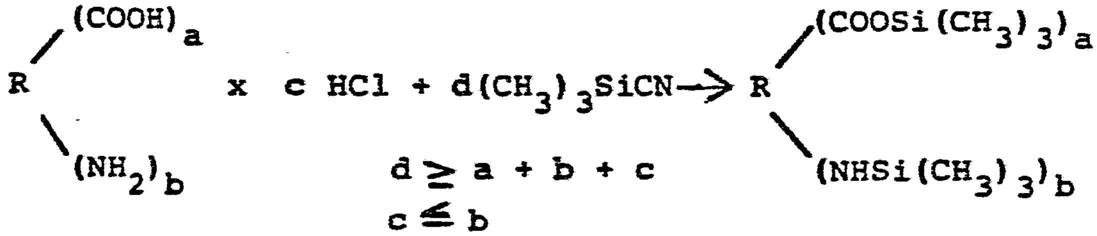

wobei R in diesen Formeln die oben angegebene Bedeutung hat.

Die erfindungsgemäße Reaktion wird im allgemeinen ohne Lösungsmittel durchgeführt. Es ist aber auch möglich, die Reaktion in einem Überschuß an Trialkylsilylcyanid durchzuführen. Weitere bei dem erfindungsgemäßen Verfahren verwendbare Lösungsmittel sind die oben erwähnten "inerten organischen Lösungsmittel", die keine über Heteroatome gebundene Wasserstoffatome besitzen.

Im allgemeinen werden die zu silylierenden Verbindungen mit Trialkylsilylcyanid zusammen unter Rückfluß erhitzt, wobei die entstehende Blausäure abdestilliert wird. Da bei Einsatz eines Überschusses an Trialkylsilylcyanid die Reaktionsmischung den Siedepunkt des letzteren nicht wesentlich übersteigt und einige Verbindungen dann nicht vollständig silyliert werden, was IR-spektroskopisch leicht verfolgt werden kann, ist es in solchen Fällen ratsam, mit einer Teilmenge an Trialkylsilylcyanid die Reaktion zu beginnen und erst bei Erreichen der gewünschten, höheren Reaktionstemperatur weiteres Trialkylsilylcyanid zuzugeben. In solchen Fällen kann es auch zweckmäßig sein, unter Druck zu arbeiten, gegebenenfalls erst nach einer bestimmten Reaktionsdauer, da die Anwendung von Druck höhere Reaktionstemperaturen und die Verwendung eines größeren Überschusses an Trialkylsilylcyanid erlaubt, was die Vervollständigung der gewünschten Reaktion begünstigt.

Die Reaktionstemperaturen liegen im allgemeinen zwischen 20 und 220°C, bevorzugt zwischen 80 und 200°C, besonders bevorzugt zwischen 100 und 180°C. In jedem Falle ist es

am günstigsten, die Temperatur so zu wählen, daß die Umsetzung unter Rückfluß der Reaktionsmischung stattfindet, wobei selbstverständlich die entstehende Blausäure abgetrennt wird.

Bei Einsatz von Hydrochloriden bzw. Hydraten muß der Stöchiometrie entsprechend mehr Trialkylsilylcyanid eingesetzt werden, da hierbei Trialkylsilylchlorid bzw. Hexaalkyldisiloxan entstehen.

Zur Aufarbeitung wird lediglich der eventuell eingesetzte Überschuß an Trialkylsilylcyanid abdestilliert, gegebenenfalls unter Anwendung von Vakuum. Bei Einsatz reiner Ausgangsprodukte liegen dann die reinen, silylierten Endprodukte vor.

Eine weitere Reinigung kann fast immer durch Destillation erfolgen. Selbst nicht destillierbare Ausgangsverbindungen wie Melamin, Saccharose oder Lysin sind nach ihrer Silylierung destillierbar.

Eine Reinigung durch Umkristallisation ist auf Grund der relativ hohen Löslichkeit der silylierten Produkte nur in seltenen Fällen möglich und sinnvoll durchführbar. Beispielsweise ist 3-Methyl-6-phenyl-4-(bis-trimethylsilyl-amino)-1,2,4-triazin-5(4H)-on aus Waschbenzin in konzentrierter Lösung umkristallisierbar.

Die nachfolgenden Beispiele dienen zur weiteren Erläuterung der Erfindung.

## Beispiele

Die Ausbeuten sind nicht in allen Fällen optimiert. Die angegebenen Namen der erhaltenen Silylverbindungen sind nicht in allen Fällen die systematischen Bezeichnungen; maßgebend ist in jedem Falle die angegebene Strukturformel.

### Beispiel 1

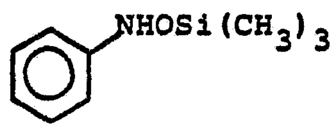

Zu 336 g (3,08 Mol) Phenylhydroxylamin wurden 625 ml (5 Mol) Trimethylsilylcyanid gegeben und anschließend wurde unter Rückfluß erhitzt, wobei entstandene Blausäure über den auf 35°C gehaltenen Kühler abgetrennt wurde. Anschließend wurde destillativ aufgearbeitet. Es wurden 520 g (≙ 93 % d.Th.) O-Trimethylsilylphenylhydroxylamin erhalten;
Kp: 56°C/0,1 mbar. Die Substanz ist leicht löslich in Waschbenzin.

### Beispiel 2

O,O',N-Tris-trimethylsilyl-asparaginsäure

$$(CH_3)_3SiOOC-CH_2-\underset{\displaystyle HN-Si(CH_3)_3}{\underset{|}{CH}}-COOSi(CH_3)_3$$

0165509

100 g (0,75 Mol) Asparaginsäure und 240 g (2,4 Mol) Trimethylsilylcyanid wurden bis 170°C Sumpftemperatur erhitzt und entstandene Blausäure abdestilliert. Anschließend wurde destillativ aufgearbeitet. Die Tris-trimethylsilyl-asparaginsäure ist in den meisten organischen Lösungsmitteln leicht löslich.
Kp: 106-108°C/0,2 mbar; Ausbeute: 240 g (≙ 92 % d.Th.).

Folgende silylierte Aminosäuren wurden analog Beispiel 2 erhalten; alle Silylverbindungen sind in Waschbenzin gut löslich (Beispiele 3 - 6):

| | |
|---|---|
| Beispiel 3 | Siedepunkt: |
| $(CH_3)_3SiNH-CH_2-COOSi(CH_3)_3$ | Kp: 83-84°C/20 mbar |
| Beispiel 4 | |
| $(CH_3)_3SiNH-(CH_2)_3COOSi(CH_3)_3$ | Kp: 85-87°C/0,8 mbar |
| Beispiel 5 | |
| $(CH_3)_3SiNH-CH_2CH_2-COOSi(CH_3)_3$ | Kp: 97°C/20 mbar |
| Beispiel 6 | |
| $(CH_3)_3SiNH-(CH_2)_4-CH(NH-Si(CH_3)_3)-COOSi(CH_3)_3$ | Kp: 125-126°C/1 mbar |

Beispiel 7

O,N,N'-Tris-trimethylsilyl-lysin

$$(CH_3)_3SiNH-(CH_2)_4-\underset{NHSi(CH_3)_3}{\underset{|}{C}H}-COOSi(CH_3)_3$$

91,4 g (0,5 Mol) Lysinmonohydrochlorid und 398 g (4 Mol) Trimethylsilylcyanid wurden 1 Stunde unter Rückfluß erhitzt. Entstandenes Trimethylsilylchlorid und Blausäure wurden über den auf 65°C gehaltenen Kühler abgetrennt. Anschließend wurde destilliert.
Es blieben 173 g Tris-trimethylsilyl-lysin zurück (≙ 95 % d.Th.)
Kp: 125 - 126°C/1 mbar.

Beispiel 8

O,N-Bis-trimethylsilyl-6-aminopenicillansäure

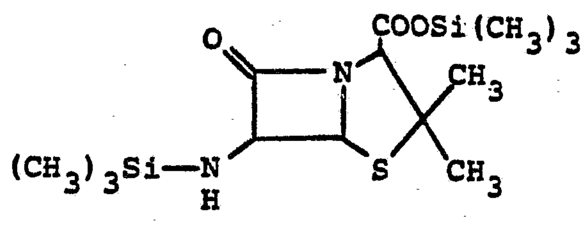

21,6 g (0,1 Mol) 6-Aminopenicillansäure und 29,7 g (0,3 Mol) Trimethylsilylcyanid wurden 4 Stunden bei 70°C gehalten. Anschließend wurde die klare Lösung im Wasserstrahlvakuum eingeengt, gegen Ende wurde noch

Hochvakuum angelegt; die Badtemperatur wurde bei 70°C gehalten. Der ölige Rückstand wurde spektroskopisch als N,O-Bis-trimethylsilyl-6-aminopenicillansäure identifiziert. Die Substanz ist in den meisten organischen Lösungsmitteln leicht löslich.

<u>Beispiel 9</u>

Acrylsäuretrimethylsilylester

$$CH_2{=}CH{-}COOSi(CH_3)_3$$

Zu 72 g (1 Mol) Acrylsäure wurden 105 g (1,05 Mol) Trimethylsilylcyanid zugetropft, die Mischung wurde zum Rückfluß erhitzt und entstandene Blausäure über Kopf abdestilliert. Nach Destillation wurden 143 g (99 % d.Th.) Acrylsäuretrimethylsilylester erhalten; Kp: 35 - 38°C/20 mbar; die Substanz ist in Waschbenzin löslich.

<u>Beispiel 10</u>

O,O',O",O'"-Tetrakis-trimethylsilyl-citronensäure

$$\begin{array}{c} CH_2COOSi(CH_3)_3 \\ | \\ (CH_3)_3Si{-}O{-}C{-}COOSi(CH_3)_3 \\ | \\ CH_2COOSi(CH_3)_3 \end{array}$$

96 g (0,5 Mol) Citronensäure und 230 g (2,3 Mol) Trimethylsilylcyanid wurden bis 125°C Sumpftemperatur

erhitzt und die entstandene Blausäure abdestilliert. Anschließend wurde destilliert. Es wurden 222 g (≙92 % d.Th.) Tetrakis-trimethylsilyl-citronensäure isoliert; Kp: 119 - 121°C/0,2 mbar; die Substanz ist in Methylenchlorid leicht löslich.

Beispiel 11

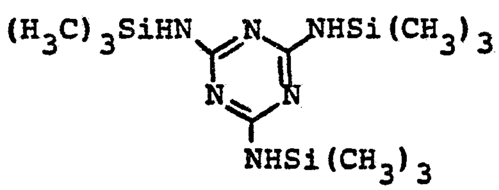

Tris-trimethylsilyl-melamin

63 g (0,5 Mol) Melamin, 297 g (3 Mol) Trimethylsilylcyanid und 200 ml Glykolmonomethyletheracetat wurden 1 Stunde unter Rückfluß erhitzt und die entstandene Blausäure wurde über den auf 35°C gehaltenen Kühler abgetrennt.
Nach Entfernen des Lösungsmittels wurde destilliert. Es blieben 170 g (≙ 99 % d.Th.) Tris-trimethylsilylmelamin; Kp: 148 - 150°C/0,15 mbar; Fp. 132 - 134°C.
Die Substanz ist in den meisten organischen Lösungsmitteln leicht löslich.

Beispiel 12

O,O',O"-Tris-trimethylsilyl-5-chlorbarbitursäure

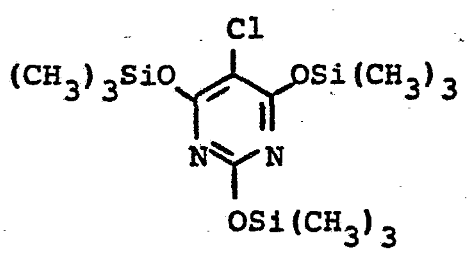

Zu 186 g (1,14 Mol) 5-Chlorbarbitursäure wurden 346 g (3,46 Mol) Trimethylsilylcyanid zugetropft, anschließend wurde erhitzt, die Blausäure dabei ausgetrieben und zum Schluß der Rückstand destilliert. Es wurden 404 g (≙ 94 % d.Th.) Tris-trimethylsilyl-5-chlorbarbitursäure erhalten;
Kp: 116 - 118°C/0,05 mbar.

Analog zu Beispiel 12 wurden folgende persilylierte Heterocyclen synthetisiert:

<u>Beispiel 13</u>

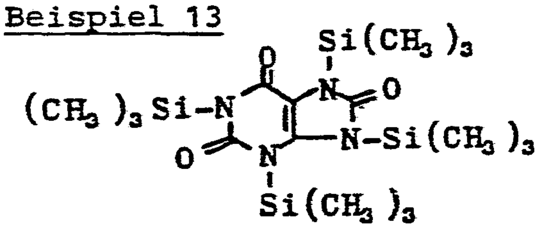

Kp: 153-155°C/0,2 mbar
Fp.: 123,5-125,5°C

<u>Beispiel 14</u>

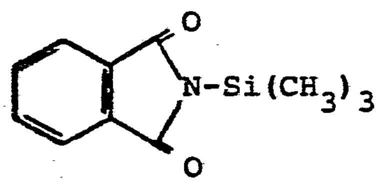

Kp: 119-122°C/0,3 mbar
Fp.: 71-73°C

<u>Beispiel 15</u>

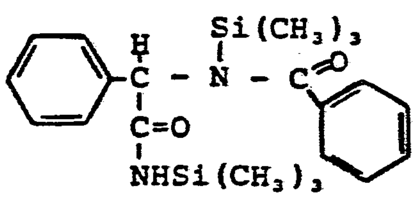

N,N'-Bissilyliertes α-Benzoylaminophenylessigsäureamid

5,1 g -Benzoylaminophenylessigsäureamid und 8 ml Trimethylsilylcyanid wurden in 50 ml Toluol 4 Stunden unter Rückfluß erhitzt. Hierbei entstand eine klare Lösung. Es wurde kalt abgesaugt und das oben genannte bissilylierte Derivat des Ausgangsproduktes erhalten.
Fp.: 220 - 222°C.
Die Ausgangsverbindung ist dagegen in Toluol unlöslich und aus DMF umkristallisierbar.

Beispiel 16

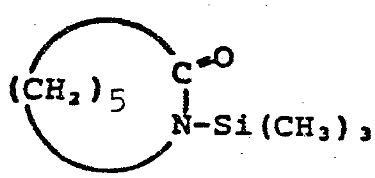

N-Trimethylsilyl-caprolactam

339 g (3 Mol) ε-Caprolactam und 300 g (3 Mol) Trimethylsilylcyanid wurden unter Rückfluß erhitzt, wobei über den auf 35°C geheizten Kühler die entstandene Blausäure abgetrennt wurde.
Nachdem die Sumpftemperatur 150°C erreicht hatte, wurde weiteres Trimethylsilylcyanid zugegeben, so daß die Sumpftemperatur beibehalten werden konnte. Die Gesamtreaktionsdauer betrug 6 Stunden. Anschließend wurde über eine 40 cm Vigreux-Kolonne rektifiziert.
Es wurden 450 g Trimethylsilyl-caprolactam (GC: 90 %) erhalten.
Kp: 115 - 117°C/20 mbar.

Beispiel 17

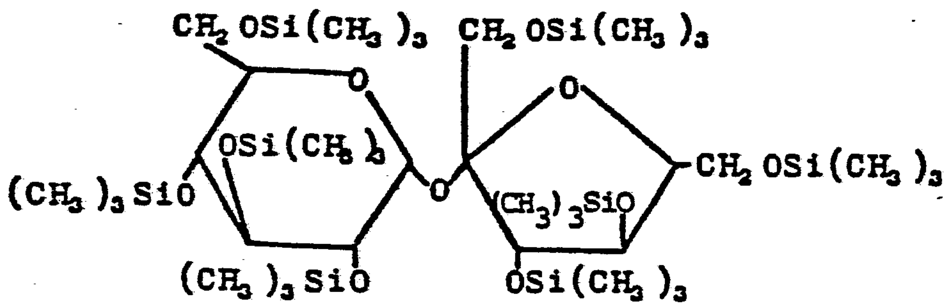

Per-trimethylsilyl-saccharose

34,2 g (0,1 Mol) Saccharose wurden mit 120 g (1,2 Mol) Trimethylsilylcyanid am Rückfluß erhitzt und entstandene Blausäure dabei abdestilliert. Anschließend wurde destilliert. Es wurden 90 g (≙ 97 % d.Th.) Per-trimethylsilyl-saccharose erhalten.
Kp: ca. 210°C/0,1 mbar.

Beispiel 18

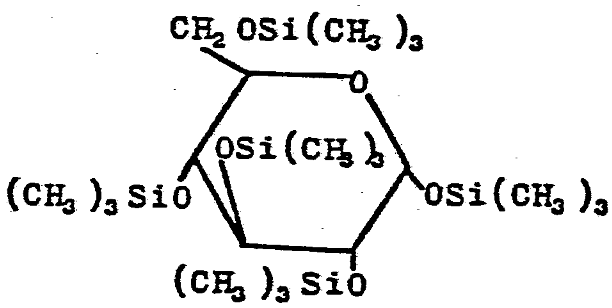

Pentakis-trimethylsilyl-glucose

99 g (0,55 Mol) Glucose und 500 g (5 Mol) Trimethylsilylcyanid wurden bei 160°C Sumpftemperatur erhitzt und entstandene Blausäure wurde destillativ abgetrennt.

Nach Destillation blieben 260 g (≙ 87 % d.Th.) Pentakis-trimethylsilyl-glucose, welche in fast allen organischen Lösungsmitteln leicht löslich ist.
Kp: 133 - 138°C/0,6 mbar.

Beispiel 19

N,N'-Bis-trimethylsilyl-dithiooxamid

$$(CH_3)_3Si-NH-\overset{S}{\overset{\|}{C}}-\overset{S}{\overset{\|}{C}}-NH-Si(CH_3)_3$$

60 g (0,5 Mol) Dithiooxamid und 250 g (2,5 Mol) Trimethylsilylcyanid wurden unter Rückfluß erhitzt, und die entstandene Blausäure wurde über den auf 35°C temperierten Kühler abdestilliert.

Anschließend wurde eingeengt und aus Acetonitril umkristallisiert. Man erhielt 107 g (≙ 81 % d.Th.) Bis-trimethylsilyl-dithiooxamid.
Fp. 123 - 128°C.

Beispiel 20

$$(CH_3)_3Si-NH-\overset{O}{\overset{\|}{C}}-\overset{O}{\overset{\|}{C}}-NH-Si(CH_3)_3$$

Analog zu Beispiel 19 wurde Oxamid zum N,N'-Bis-trimethylsilyl-oxamid silyliert.
Fp. 116 - 118°C (Waschbenzin)

Beispiel 21

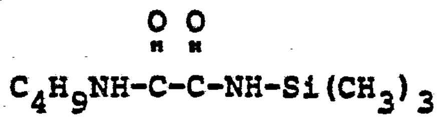

Analog zu Beispiel 19 wurde n-Butyl-oxamid zu Monotrimethylsilyl-n-butyloxamid silyliert.
Kp.: 142 - 144°C.

Beispiel 22

N-Trimethylsilylacetanilid

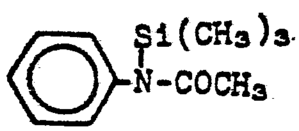

67,5 g (0,5 Mol) Acetanilid wurden mit 52 g (0,52 Mol) Trimethylsilylcyanid erhitzt, bis die Sumpftemperatur 200°C erreicht hatte. Nach Destillation wurden 70,5 g (≙ 68 % d.Th.) Trimethylsilylacetanilid erhalten.
Kp.: 102 - 6°C/20 mbar.

Beispiel 23

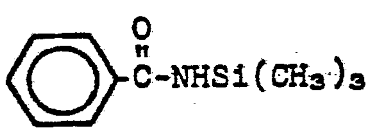

Analog zu Beispiel 22 wurde N-Trimethylsilyl-benzamid erhalten.
Kp.: 126 - 128°C/0,2 mbar. Fp. 116 - 118°C.

Beispiel 24

p-Toluolsulfonsäuretrimethylsilylester

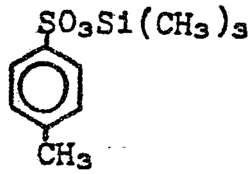

95 g (0,5 Mol) p-Toluolsulfosäurehydrat und 150 g (1,5 Mol) Trimethylsilylcyanid wurden auf 120°C erhitzt und entstandene Blausäure über Kopf abdestilliert. Nach Destillation wurden 112 g (≙100 % d.Th.) p-Toluolsulfonsäuretrimethylsilylester erhalten. Kp.: 158 - 61°C. Die Substanz ist in den meisten organischen Lösungsmitteln leicht löslich.

Beispiel 25

N-Trimethylsilylneopentylcyanamid

$$(CH_3)_3C-CH_2-N(Si(CH_3)_3)-CN$$

113 g (1 Mol) rohes Neopentylcyanamid und 120 g (1,2 Mol) Trimethylsilylcyanid wurden bis auf 170°C erhitzt. Entstandene Blausäure wurde über Kopf abdestilliert. Nach Destillation wurden 111 g (≙ 60 % d.Th.) Trimethylsilylneopentylcyanamid erhalten. Kp.: 65 - 69°C/14 mbar. Die Substanz ist lagerstabil.

Beispiel 26

Analog zu Beispiel 25 wurde N-Trimethylsilyl-phenylcyanamid durch Erhitzen der Ausgangskomponenten im Toluol hergestellt.
Kp.: 65°C/0,05 mbar.

Die Substanz ist lagerstabil und in Waschbenzin löslich.

Beispiel 27

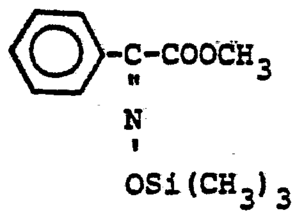

17,9 g (0,1 Mol) Phenylglyoxylsäuremethylesteroxim und 100 ml Trimethylsilylcyanid wurden 3 Stunden unter Rückfluß erhitzt. Anschließend wurde im Wasserstrahlvakuum bis 60°C Sumpftemperatur eingeengt, gegen Ende noch kurz im Hochvakuum.
Der Rückstand bestand nach spektroskopischen Untersuchungen aus Phenylglyoxylsäuremethylester-trimethylsilyloxim.

Beispiel 28

N-Trimethylsilyl-diphenylharnstoff

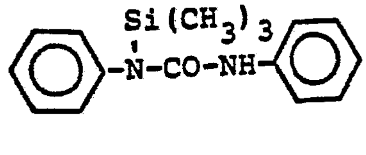

186 g Anilin und 247,5 g Trimethylsilylcyanid wurden 11 Stunden unter Rückfluß erhitzt, wobei die entstandene Blausäure über den auf 40°C erhitzten Kühler abdestilliert wurde. Anschließend wurden 50 ml Toluol zugegeben und weitere 9 Stunden unter Rückfluß erhitzt. Es wurde eingeengt, in 150 ml Toluol verrührt, vom nicht umgesetzten Ausgangsprodukt abgesaugt und erneut eingeengt, gegen Ende bei 65°C Badtemperatur im Hochvakuum. Es blieben 28 g Rückstand, der sich spektroskopisch als N-Trimethylsilyl-diphenylharnstoff erwies. Die Substanz ist in Toluol gut löslich.

Beispiel 29

N-Trimethylsilylanilin

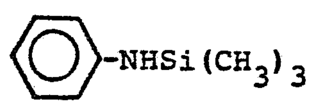

186 g (2 Mol) Anilin und 247,5 g (2,5 Mol) Trimethylsilylcyanid wurden 11 Stunden unter Rückfluß erhitzt, wobei über den auf 40°C gehaltenen Kühler die entstandene Blausäure abgetrennt wurde. Anschließend wurde rektifiziert. Es wurden 300 g (≙ 91 % d.Th.) N-Trimethylsilylanilin isoliert.
Kp.: 98 - 101°C/16 mbar.
Das silylierte Anilin ist gegenüber nicht silyliertem gut in Waschbenzin löslich.

Analog Beispiel 29 wurden auch die folgenden silylierten Amine erhalten:

| Beispiel | | Siedepunkt bzw. Schmelzpunkt |
|---|---|---|
| 30 | 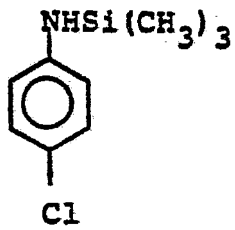 | Kp.: 132-3°C/16 mbar |
| 31 | 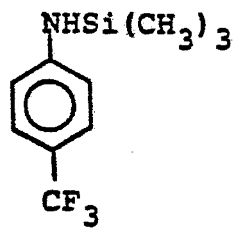 | Kp.: 106-110°C/16 mbar |
| 32 | 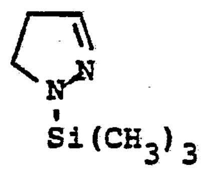 | Kp.: 41-43°C/12 mbar |
| 33 | 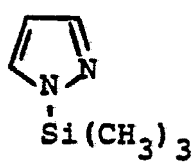 | Kp.: 98-103°C/18 mbar |
| 34 | 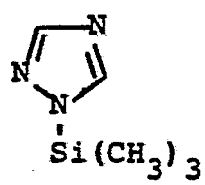 | Kp.: 83-85°C/18 mbar |
| 35 | $CH_3-\underset{Si(CH_3)_3}{N}-CH_2-CH_2-\underset{Si(CH_3)_3}{N}-CH_3$ | Kp.: 94-97°C/12 mbar |

| Beispiel | | Siedepunkt bzw. Schmelzpunkt |
|---|---|---|
| 36 | $[(CH_3)_2N-CH_2-CH_2-CH_2-]_2N-Si(CH_3)_3$ | Kp: 135-140°C/20 mbar |
| 37 | 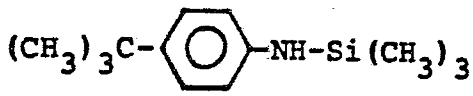 | Kp.: 130-135°C/0,2 mbar<br>Fp: 148-151°C |
| 38 | 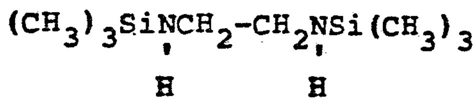 | Kp.: 79 - 81°C/16 mbar |
| 39 | 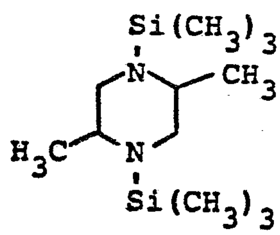 | Kp.: 94 - 98°C/16 mbar |
| 40 | 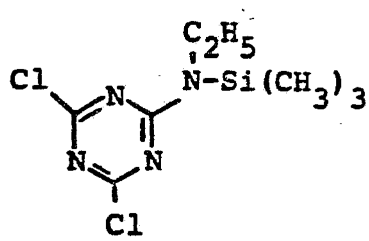 | Kp : 98 - 99°C/0,08 mbar |
| 41 | 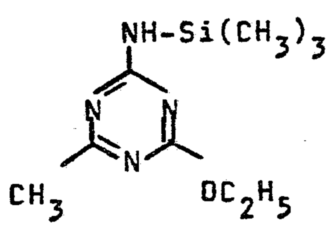 | Kp.: 75°C / 0,05 mbar |
| 42 | 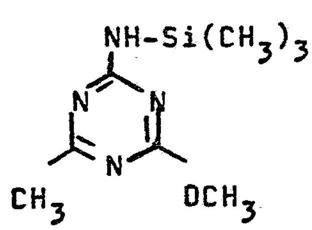 | Kp.: 128°C / 16 mbar |

Beispiel

43 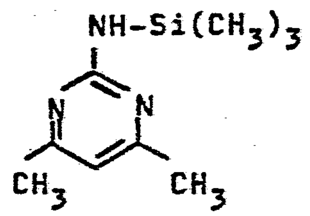 Kp.: 105°C / 16 mbar

44 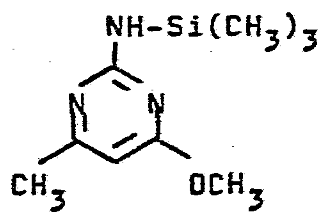 Kp.: 115°C / 16 mbar

Beispiel 45

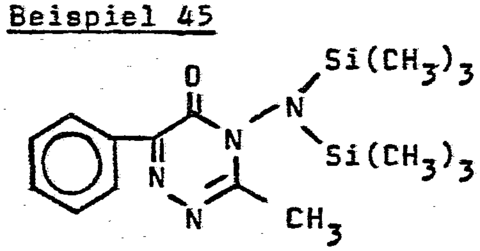

In einer 2-Hals-Rührkolbenapparatur mit Thermometer und einem auf 60°C gehaltenen Kühler wurden 50 g (0,25 Mol) 4-Amino-3-methyl-6-phenyl-1,2,4-triazin-5 (4H)-on und 37,5 ml Trimethylsilylcyanid unter langsamem Rühren am Rückfluß erhitzt, bis eine Sumpftemperatur von 175°C erreicht war. Anschließend wurde weiter erhitzt und durch stufenweise Zugabe von insgesamt 47 ml Trimethylsilylcyanid bei ca. 175°C die Reaktion zu Ende geführt. Nach 15,5 Stunden Reaktionszeit wurden bei 100°C Sumpftemperatur die Tiefsieder abdestilliert. Es blieben 85,1 g Rückstand; ein Gaschromatogramm ergab einen Gehalt von 99 % 4-(Bis-trimethylsilyl-amino)-3-methyl-6-phenyl-1,2,4-triazin-5(4H)-on (GC-MS-Kopplung). Bei 0,66 mbar und 170 - 175°C wurde destilliert; es blieben 77,5 g (≙ 90 % d.Th.) eines hellbraunen Öls zurück, welches langsam durchkristallisierte.

Beispiel 46

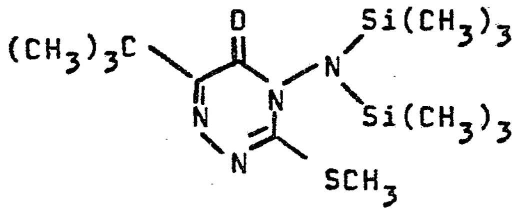

21,4 g (0,1 Mol) 4-Amino-6-tert.-butyl-3-methylthio-1,2,4-triazin-5(4H)-on (95 %ige Ware) und 12,5 ml Trimethylsilylcyanid wurden am Rückfluß erhitzt, wobei über einen auf 60°C beheizten Kühler entstehende Blausäure abgetrennt wurde. Nachdem eine Sumpftemperatur von 205°C erreicht war, wurde 9 Stunden weitergerührt, dann mit 0,2 g Zinkchlorid versetzt und weitere 9 Stunden unter Zugabe von Trimethylsilylcyanid die Reaktionstemperatur zwischen 140 und 160°C gehalten.

Nach Destillation im Hochvakuum (0,32 - 0,45 mbar) bei 125 - 140°C blieben 23 g gelbes Öl zurück, welches nach spektroskopischer Untersuchung zu 91 % aus 4-(Bis-trimethylsilyl-amino)-6-tert.-butyl-3-methylthio-1,2,4-triazin-5(4H)-on bestand (≙ 58 % d.Th.).

Beispiel 47

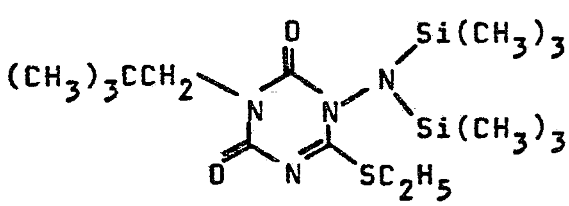

25,8 g (0,1 Mol) 1-Amino-6-ethylthio-3-neopentyl-1,3,5-triazin-2,4(1H,3H)-dion und 3 ml N-Methylpyrolidon wurden mit 0,2 g Zinkchlorid versetzt und bei ca. 170°C aufgeschmolzen. Anschließend wurde bei ca. 170°C mit Trimethylsilylcyanid stufenweise versetzt, so daß die Reaktionstemperatur aufrecht erhalten wurde. Nach 8 Stunden Reaktionszeit wurde destillativ aufgearbeitet. Es blieben 18,3 g eines gelben Öls (Kp.: 175 - 185°C/ 0,266 mbar), welches langsam erstarrte. Es enthielt nach gaschromatographischer Untersuchung 83,5 % 1-(Bis-trimethylsilyl-amino)-6-ethylthio-3-neopentyl-2,3,5-triazin-2,4(1H,3H)-dion (≙ 89 % d. Th.).

Beispiel 48

$(CH_3)_3Si-S-CH_2-CH_2-S-Si(CH_3)_3$

94,2 g (1 Mol) Ethandithiol und 265 ml (2,1 Mol) Trimethylsilylcyanid wurden am Rückfluß erhitzt, bis die Sumpftemperatur 140°C erreichte. Es wurden weitere 60 ml Trimethylsilylcyanid zugesetzt und weitere 2 h am Rückfluß erhitzt. Die Sumpftemperatur stieg dabei auf 150°C an. Anschließend wurde destillativ aufgearbeitet.

Es wurden 200 g (= 84% der Theorie) Bis-trimethylsilylethandithiol erhalten.
Kp.: 120°C/20 mbar

Beispiel 49

$(CH_3)_3Si-O-CH_2-CH_2-S-Si(CH_3)_3$

Analog zu Beispiel 48 wurden 2 Mercaptoethanol zu Bistrimethylsilylmercaptoethanol umgesetzt.
Kp.: 92°C / 20 mbar

Patentansprüche

1. Verfahren zur Verbesserung der Löslichkeit von schwer löslichen organischen Verbindungen, welche über ein Heteroatom gebundene "Zerewitinow-aktive" Wasserstoffatome besitzen und damit silylierbar sind, in solchen organischen Lösungsmitteln, die keine über Heteroatome gebundenen Wasserstoffatome tragen, durch Überführung in Silylderivate, dadurch gekennzeichnet, daß man als Silylierungsmittel ein Trialkylsilylcyanid einsetzt.

2. Verfahren nach Anspruch 1, dadurch gekennzeichnet, daß man als Trialkylsilylcyanid ein Tri($C_{1-4}$-alkyl)-silylcyanid einsetzt.

3. Verfahren nach Anspruch 1, dadurch gekennzeichnet, daß man als Trialkylsilylcyanid Trimethylsilylcyanid, $(CH_3)_3Si-CN$, einsetzt.

4. Verfahren nach Anspruch 1, dadurch gekennzeichnet, daß man die Silylierung bei Temperaturen zwischen 20 und 220°C, bevorzugt zwischen 80 und 200°C, besonders bevorzugt zwischen 100 und 180°C durchführt.

5. Verfahren nach Anspruch 1, dadurch gekennzeichnet, daß man pro Äquivalent zu silylierendes Zerewitinow-aktives Wasserstoffatom in den silylierbaren organischen Verbindungen mindestens 1 Mol, vorzugsweise 1 - 1,5 Mol, Trialkylsilylcyanid einsetzt.

6. Verfahren nach Anspruch 1, dadurch gekennzeichnet, daß man als silylierbare organische Verbindungen solche organische Verbindungen einsetzt, die wenigstens ein über O, S oder N gebundenes Zerewitinow-aktives Wasserstoffatom tragen.

7. Verfahren nach Anspruch 6, dadurch gekennzeichnet, daß man als silylierbare organische Verbindungen Aminosäuren und Kohlenhydrate einsetzt.

8. Verfahren nach Anspruch 7, dadurch gekennzeichnet, daß man Aminosäuren der Formel (I)

$$(NH_2)_b - R - (COOH)_a \qquad (I)$$

worin

a für eine ganze Zahl von 1 bis 4, insbesondere für 1 oder 2 steht,

b für eine ganze Zahl von 1 bis 4, insbesondere für 1 oder 2 steht und

R für zwei- oder mehrwertige Alkyl- oder Arylreste steht, die gegebenenfalls weiter substituiert sein können, sowie für ein- oder mehrkernige, zwei- oder mehrwertige, gesättigte oder ungesättigte oder aromatische Heterocyclenreste, die ein oder mehrere Heteroatome

enthalten und gegebenenfalls substituiert sind, (wobei als zusätzliche Substituenten möglich sind: Hydroxyl, Mercapto, Alkylamino, Dialkylamino, Halogen, Nitro, Alkyl, Aryl, Heteroaryl, Alkoxy, Alkylthio, Aryloxy, Arylthio),

einsetzt, insbesondere $\alpha$-Aminosäuren des Typs (I).

9. Verfahren nach Anspruch 6, dadurch gekennzeichnet, daß man als silylierbare organische Verbindungen heterocyclische Amine einsetzt.

10. Verfahren nach Anspruch 9, dadurch gekennzeichnet, daß man Amino-pyrimidine und Amino-triazine einsetzt.

Europäisches Patentamt

# EUROPÄISCHER RECHERCHENBERICHT

0165509
Nummer der Anmeldung

EP 85 10 6542

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | JOURNAL OF GENERAL CHEMISTRY OF THE USSR, Band 48, Nr. 7, 1. Teil, Juli 1978, Seiten 1946,1947; M.G. VORNKOV et al.: "Cyanotrimethylsilane as a silylating agent" --- | 1-6 | C 07 F 7/10<br>C 07 F 7/18 |
| Y | CHEMICAL ABSTRACTS, Band 91, Nr. 16, 15. Oktober 1979, Seite 131, Abstract Nr. 125747j, Columbus, Ohio, US; C. SEYFERTH et al.: "Silylation: a method for benzene solubilization of benzene-insoluble, pyridine-soluble coal-derived products", & DEP. CHEM., MASSACHUSETTS INST. TECHNOL., Cambridge 1979, 58(1), 74-75 --- | 1-6 | |
| | | | RECHERCHIERTE SACHGEBIETE (Int. Cl.4) |
| A | CHEMICAL ABSTRACTS, Band 83, Nr. 18, 3. November 1975, Seite 715, Abstract Nr. 157510c, Columbus, Ohio, US; G. GIESSELMANN et al.: "Importance of chemical transformations for analytical purposes", & METHOD. CHIM. 1974, 247-257 --- | 1-6 | C 07 F 7/10<br>C 07 F 7/18 |
| A | DE-A-2 206 379 (CIBA-GEIGY) * Seite 2, Seite 29, letzter Absatz * --- -/- | 1-6 | |

Der vorliegende Recherchenbericht wurde für alle Patentansprüche erstellt.

| Recherchenort | Abschlußdatum der Recherche | Prüfer |
|---|---|---|
| BERLIN | 03-09-1985 | KAPTEYN H G |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches Patentamt

**EUROPÄISCHER RECHERCHENBERICHT**

0165509
Nummer der Anmeldung

EP 85 10 6542

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 107 196 (DOW CORNING)<br>* Spalte 1, Zeilen 56-60 *<br>--- | 1-6 | |
| A | US-A-3 432 488 (GENERAL ELECTRIC)<br>* Spalte 5, Zeilen 18-30 *<br>----- | 1-7 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| BERLIN | 03-09-1985 | KAPTEYN H G |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument